# FASCICULE DE BREVET EUROPEEN

(11) **EP 1 797 316 B1**
(45) Date de publication et mention de la délivrance du brevet: **03.06.2009**
(21) Numéro de dépôt: 05804227.6
(22) Date de dépôt: 22.09.2005
(51) Int. Cl.: F02N 11/08

(54) **DISPOSITIF DE CONTROLE D'UN SYSTEME DE DEMARRAGE/ARRE AUTOMATIQUE**
VORRICHTUNG ZUR KONTROLLE EINES AUTOMATISCHEN START/STOPP-SYSTEMS.
DEVICE FOR CONTROLLING AN AUTOMATIC START/STOP SYSTEM

(30) Priorité: 23.09.2004 FR 0410091
(43) Date de publication de la demande: 20.06.2007
(73) Titulaire: VALEO EQUIPEMENTS ELECTRIQUES MOTEUR, 94017 Créteil Cedex (FR)
(72) Inventeur: LECOLE, Brice, F-75012 Paris (FR); LAURENCE, Magali, F-75012 Paris (FR)
(74) Mandataire: de Lambilly Delorme, Marie Pierre
(86) Numéro de dépôt international: PCT/FR2005/002355
(87) Numéro de publication internationale: WO 2006/032795

(56) Documents cités:
- EP-A- 1 059 441
- EP-A- 1 469 195
- US-A- 4 381 042
- US-B1- 6 371 889

## Description

La présente invention concerne un dispositif de contrôle de l'état de fonctionnement d'un système de démarrage/arrêt automatique d'un moteur thermique d'un véhicule automobile.
L'invention trouve une application particulièrement avantageuse dans le domaine de l'industrie automobile, et plus spécialement dans celui des véhicules équipés d'un système de démarrage/arrêt automatique, tel que le système connu sous le terme anglo-saxon de « Stop and Go ».

### Etat de la technique

Les véhicules aptes à fonctionner selon le mode « Stop and Go » sont équipés d'une machine électrique réversible, ou alterno-démarreur, couplée au moteur thermique, au moyen d'une courroie par exemple. D'une manière générale, une machine électrique réversible d'un véhicule cumule deux fonctions distinctes, à savoir, d'une part, la fonction classique d'alternateur lorsque l'arbre du moteur thermique entraîne le rotor de la machine de manière à produire un courant électrique au stator, et, d'autre part, la fonction de démarreur lorsqu'à l'inverse, un courant appliqué au stator de la machine provoque la mise en rotation du rotor, lequel entraîne alors l'arbre du moteur thermique d'une manière analogue à un démarreur classique.
L'application d'un alterno-démarreur au mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage. Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré notamment au moyen de l'alterno-démarreur à la suite de la détection par le système de pilotage au démarrage du véhicule de l'enfoncement de la pédale d'embrayage par le conducteur ou de toute autre action qui peut être interprétée comme la volonté du conducteur de redémarrer son véhicule. On comprend l'intérêt du mode « Stop and Go » en terme d'économie d'énergie et de réduction de la pollution, surtout en milieu urbain.
Il faut cependant souligner que le fonctionnement de tels systèmes de démarrage/arrêt automatique est en général relativement complexe du fait, notamment, de la mise en oeuvre de multiples conditions qui doivent être vérifiées avant toute prise de décision de démarrage ou d'arrêt automatique, et de l'existence de modes de fonctionnement intermédiaires, comme des modes dégradés, auxquels le système est soumis sans certaines circonstances.
Or, les décisions liées au démarrage ou à l'arrêt automatique sont par hypothèse prises par le système à l'insu du conducteur. Ce dernier se trouve donc dans l'ignorance totale du déroulement des actions commandées par le système de démarrage et d'arrêt automatique concernant le fonctionnement du moteur thermique de son véhicule, alors que, pour des raisons de sécurité et d'agrément de conduite, il devrait en être informé le plus précisément possible.

### Objet de l'invention

C'est précisément un objet de la présente invention de proposer des moyens permettant au conducteur d'un véhicule disposant d'un système du type « Stop and Go » d'être tenu informé de l'état de fonctionnement du système.
Cet objet est atteint, conformément à la présente invention, grâce à un dispositif d'information d'un conducteur d'un véhicule équipé d'un système de démarrage/arrêt automatique d'un moteur thermique dudit véhicule, caractérisé en ce que ledit dispositif d'information comprend au moins un indicateur d'état associé à un mode de fonctionnement dudit système, apte à adopter
- une première position dans un état d'inhibition dudit mode de fonctionnement,
- une deuxième position dans un état d'activation dudit mode de fonctionnement et
- une troisième position dans un état intermédiaire et dégradé dudit mode de fonctionnement dans lequel le système en position marche n'assure pas toutes les fonctionnalités prévues.
   Cette disposition a l'avantage de permettre au conducteur non seulement de savoir si le système de démarrage/arrêt automatique est en marche ou non, mais également d'être informé d'un fonctionnement du système selon un mode intermédiaire qui, selon les applications peut correspondre par exemple à un fonctionnement en mode dégradé du système ou correspondre à un état de fonctionnement appartenant à une phase de préparation de l'arrêt du système de démarrage/arrêt automatique.

La description qui va suivre en regard de la figure unique, donnée à titre d'exemple non limitatif, fera bien comprendre en quoi consiste l'invention et comment elle peut être réalisée.

### Brève description des figures

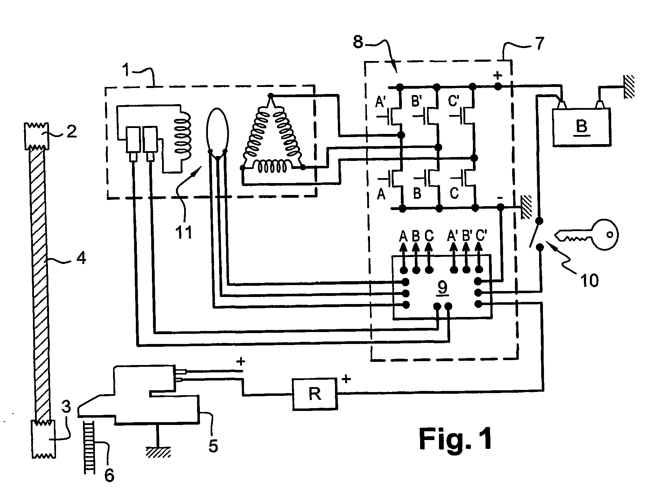

La figure 1 unique est un schéma d'un système de démarrage/arrêt automatique d'un moteur thermique d'un véhicule.

### Description détaillée de modes de réalisation préférentiels de l'invention

Sur la figure 1 est représenté un système de démarrage/arrêt automatique d'un moteur thermique d'un véhicule, notamment le système « Stop and Go » mentionné plus haut. Dans la suite de la description, il sera fait référence à un véhicule équipé d'une machine électrique réversible, telle qu'un alterno-démarreur, commandée selon les modalités du système « Stop and Go ». Bien entendu, toute autre machine électrique, réversible ou non, pourrait être utilisée dans le contexte de l'invention.
Le système de la figure 1 comprend :
- un alterno-démarreur séparé 1 comportant un arbre se terminant par une poulie 2 qui est reliée à une poulie 3 du vilebrequin du moteur thermique par l'intermédiaire d'une courroie 4. Cet alterno-démarreur est monté à la place que prend habituellement l'alternateur.
- optionnellement, un démarreur 5 classique additionnel dont le pignon est apte à engrener la denture d'une couronne 6 pour entraîner l'arbre du moteur thermique.
- une électronique 7 de pilotage.

L'électronique 7 de pilotage comprend :
- un pont 8 de transistors qui constitue un convertisseur de puissance réversible et qui assure le pilotage en mode démarreur et le redressement de préférence synchrone en mode alternateur.
- un module 9 de contrôle qui commande les différents transistors du convertisseur 8 et gère notamment les différentes fonctions suivantes :
   - puissance en modes démarreur et alternateur
   - régulation en mode alternateur
   - transition du mode démarreur au mode alternateur
   - stratégie de fonctionnement

Le module 9 de contrôle est à cet effet alimenté par la tension de la batterie, référencée par B, à laquelle il est relié par l'intermédiaire d'un interrupteur 10 de contact du véhicule.
Il reçoit en entrée des informations lui permettant de déterminer la position angulaire du rotor de l'alterno-démarreur 1, par exemple des informations fournies par des capteurs 11, tels que des capteurs à effet Hall.
En sortie, il alimente l'inducteur de l'alterno-démarreur 1, ainsi que le démarreur 5 et génère les tensions injectées sur les grilles (A, B, C ; A', B', C') des transistors du pont 8.
Par ailleurs, le module 9 de contrôle reçoit des informations provenant de capteurs de mesure et de détection répartis dans le véhicule, comme des capteurs de mesure de températures (habitacle, circuits électroniques, etc) et des capteurs de détection de la position de différents organes (pédale d'embrayage, pédale de frein, levier de vitesse, etc). D'autre part, le module 9 reçoit également des données relatives au fonctionnement du véhicule fournies par un bus de communication du véhicule (contrôle moteur, vitesse du véhicule, vitesse du moteur, etc).

Toutes les informations et données reçues par le module 9 de contrôle sont traitées de manière à définir un certain nombre de modes de fonctionnement du système de démarrage/arrêt automatique du moteur thermique.
Parmi ces modes de fonctionnement, on peut citer la mise en fonctionnement ou non du système, laquelle est caractérisée par trois états : un état d'inhibition correspondant à une position « arrêt » du système, un état d'activation correspondant à une position « marche » du système, et un état intermédiaire appelé « mode dégradé » dans lequel le système en position « marche » n'assure pas toutes les fonctionnalités prévues du fait de certains dysfonctionnements, comme l'absence de communication avec le bus CAN ou l'absence d'informations provenant des capteurs.
A chacun des états relatifs à la mise en fonctionnement du système de démarrage/arrêt automatique qui viennent d'être présentés est associée une position d'un indicateur d'état, tel que par exemple un voyant lumineux présent dans l'habitacle du véhicule afin d'informer le conducteur en conséquence.

Dans une première application de l'invention, ledit mode de fonctionnement concerne la mise en fonctionnement dudit système de démarrage/arrêt automatique S1.

Plus précisément, le système de démarrage/arrêt automatique S1- peut comporter dans sa mise en fonctionnement trois états à savoir
- un premier état d'inhibition du fonctionnement dudit système S1
- un deuxième état d'activation du fonctionnement dudit système S1
- un troisième état de fonctionnement dégradé dudit système S1.

Cette mise en fonctionnement dudit système S1 démarrage/arrêt automatique du moteur thermique s'effectue par exemple à l'aide d'un bouton B dont
- une position B1 correspond à un mode inactif du système S1
- une position B2 correspond à un mode actif du système S1,

Le passage vers le troisième état B3 correspondant au mode dégradé de fonctionnement du système s'effectue automatiquement lorsqu'une condition prédéterminée de fonctionnement n'est pas conforme à un fonctionnement nominal.

Ainsi, en mode dégradé, le système S1 peut:
- avoir perdu sa fonctionnalité démarrage/arrêt
- ne plus être en mesure de réaliser un arrêt automatique.

Pour chacune de ces positions, un dispositif de contrôle permet au conducteur de connaître l'état du système de démarrage/arrêt automatique.

A cet effet, un indicateur d'état F1 est prévu. A titre d'exemple, s'il s'agit d'un indicateur visuel ou sonore, selon l'état de la mise en fonctionnement de S1, cet indicateur peut être configuré de la manière suivante :
- l'indicateur d'état F1 est actif en permanence ON si le système S1 est inactif B1.
- l'indicateur d'état F1 est inactif OFF si le système S1 est actif.
- l'indicateur d'état F1 est intermittent ON/OFF si le système S1 est en mode dégradé

En variante l'indicateur d'état est actif en permanence en mode dégradé si par exemple le mode dégradé correspond à la perte de la fonction démarrage arrêt du système S1. Ce cas, d'un point de vue fonctionnel correspond à la position B1 du bouton qui inhibe la fonction démarrage/arrêt du système S1.

Dans le cas où l'indicateur d'état F1 est un voyant lumineux alors
- l'état ON de F1 correspond à une activation continue du voyant lumineux
- l'état OFF de F1 correspond à une désactivation du voyant lumineux
- l'état ON/OFF de F1 correspond à une activation intermittente du voyant lumineux, c'est-à-dire un clignotement du voyant lumineux. Plusieurs modes de clignotement peuvent être envisagés correspondants à différents modes dégradés de fonctionnement possibles du système S1.

De manière pratique, le voyant lumineux qui renseigne le conducteur de l'état de fonctionnement du système S1 peut être intégré au bouton B.

De manière similaire l'indicateur d'état peut être un signal sonore qui peut être activé, désactivé ou activé de manière discontinue.

Selon un autre mode de réalisation, l'indicateur d'état du fonctionnement du système "Stop and Go" S1, peut consister en un afficheur qui indique clairement en langage textuel ou symbolique l'état du système S1

Le tableau T1 ci-dessous résume les différents modes de fonctionnement de cette première application.

| T1 | B1 | B2 | B3 |
|---|---|---|---|
| S1 | INACTIF | ACTIF | DEGRADE |
| F1 | ON | OFF | ON/OFF ON |

Les deux tableaux T2, T3 ci-dessous montrent l'état de l'indicateur d'état F1 selon que la clé de contact du véhicule automobile est en position inactive +APC OFF ou en position active +APC ON, cette dernière position correspondant à la mise sous tension du réseau de bord du véhicule automobile.

Le deuxième tableau T2 correspond à un fonctionnement nominal du système S1. Quand la clé de contact est inactive l'indicateur d'état est inactif. Quand la clé de contact est activée, alors l'indicateur d'état F1 se positionne selon l'état du bouton B.
Si le système S1 est activé (position B2 du bouton B) alors l'indicateur d'état F1 est inactif OFF
Si le système S1 est désactivé (position B1 du bouton B) alors l'indicateur d'état F1 est inactif ON

**Mode Nominal:**

| T2 | + APC OFF | + APC ON |
|---|---|---|
| B1 S1 INACTIF | F1 OFF | F1 ON |
| B2 S2 ACTIF | F1 OFF | F1 OFF |

Le troisième tableau T3 correspond à un fonctionnement dégradé du système S1. Quand la clé de contact est inactive l'indicateur d'état est inactif. Quand la clé de contact est activée, alors l'indicateur d'état F1 se positionne selon l'état du bouton B. Si le système S1 est activé (position B2 du bouton B) alors l'indicateur d'état F1 est intermittent ON/OFF
Si le système S1 est désactivé (position B1 du bouton B) alors l'indicateur d'état F1 est inactif ON

**Mode DEGRADE:**

| T3 | + APC OFF | + APC ON |
|---|---|---|
| B1 S1 INACTIF | F1 OFF | F1 ON |
| B2 S2 ACTIF | F1 OFF | F1 ON/OFF |

Dans une deuxième application de l'invention, ledit mode de fonctionnement concerne l'arrêt automatique dudit système de démarrage/arrêt automatique.
En particulier, il est prévu par l'invention que l'indicateur d'état F2 est dans ladite
- première position P1 dans un état d'inhibition d'une phase d'arrêt automatique,
- deuxième position P2 dans un état d'activation d'un arrêt automatique,
- la troisième position P3 dans un état d'empêchement à un arrêt automatique.

De cette manière, le conducteur du véhicule a la possibilité de recevoir un signal l'avertissant d'un probable arrêt du moteur thermique par le système de démarrage/arrêt automatique en plus des informations concernant l'entrée ou non dans une phase d'arrêt effectif.

Un mode de réalisation de cette deuxième application de l'invention consiste en ce que
- la première position P1 de l'indicateur d'état F2 est une position « inactive »,
- la deuxième position P2 une position « active »,
- la troisième position P3 une position « intermittente ».

Comme indiqué précédemment, l'indicateur peut être sonore, visuel ou textuel.

Par convention, les trois positions P1, P2 et P3 appartiennent à la phase de préparation de l'arrêt automatique du système S1.

La système S1 se trouve dans la première position P1 lorsque que toutes les conditions dites stationnaires ne sont pas satisfaites. Le processus d'arrêt automatique n'est pas encore enclenché et le système n'est pas encore dans la phase de préparation de l'arrêt automatique

Les conditions dites stationnaires sont sensiblement stables au cours de l'exécution d'un ordre d'arrêt. Ce sont toutes les conditions nécessaires pour autoriser le déclenchement d'un arrêt automatique.

La système S1 se trouve dans la deuxième position P2 lorsque que toutes les conditions dites stationnaires et variables sont satisfaites. Le processus d'arrêt automatique est alors enclenché.
Les conditions dites variables sont susceptibles d'évoluer au cours de l'exécution dudit ordre d'arrêt. Par exemple, il peut s'agir d'un état de charge de la batterie ou de la température du moteur thermique

Le système S1 transmet alors l'ordre d'arrêt par exemple à l'unité de contrôle du moteur thermique qui procédera à l'arrêt du moteur thermique.
Par convention, cette phase de transmission de l'ordre d'arrêt correspond à la phase d'arrêt et est consécutive à la phase de préparation de l'arrêt décrite précédemment.

Pendant cette phase d'arrêt, l'indicateur d'état F2 est actif.

De préférence, pendant cette phase d'arrêt, le système S1 teste continuellement les conditions dites stationnaires en sorte d'autoriser un démarrage de type "réflexe" avant l'arrêt effectif du moteur thermique.

La système S1 se trouve dans la troisième position P3 lorsque que toutes les conditions dites stationnaires sont satisfaites et que au moins une condition variable n'est pas satisfaites. Dans ces conditions, la phase d'arrêt ne peut pas être lancée.

Pendant cette phase de préparation de l'arrêt automatique, l'indicateur d'état F2 est actif de manière intermittente pour indiquer que le système S1 ne peut lancer le processus d'arrêt automatique à cause d'au moins une condition variable qui ne satisfait pas aux conditions requises.

Bien entendu, les différentes positions des indicateurs d'état F1, F2 sont relatives, une position active ON de cet indicateur d'état pouvant correspondre à un état allumé ou éteint dans le cas par exemple où l'indicateur d'état est un voyant lumineux.

## Revendications

1. Dispositif de contrôle de l'état de fonctionnement d'un système (S1) de démarrage/arrêt automatique d'un moteur thermique dudit véhicule, ledit dispositif comprend au moins un indicateur d'état de fonctionnement (F1, F2) associé à un mode de fonctionnement dudit système, adoptant une première position (B1, P1) dans un état d'inhibition dudit mode de fonctionnement, une deuxième position (B2, P2) dans un état d'activation dudit mode de fonctionnement et une troisième position (B3, P3) dans un état intermédiaire dudit mode de fonctionnement,
ledit mode de fonctionnement concerne la mise en fonctionnement dudit système (S1) de démarrage/arrêt automatique,
**caractérisé en ce que** ledit indicateur d'état (F1) est dans ladite première position dans un état d'inhibition du fonctionnement dudit système, dans la deuxième position dans un état d'activation du fonctionnement dudit système, et dans la troisième position dans un état de fonctionnement dégradé dans lequel le système en position marche n'assure pas toutes les fonctionnalités prévues.

2. Dispositif selon la revendication 1, **caractérisé en ce que** ladite première position est une position « ACTIVE» (ON), la deuxième position une position « INACTIVE» (OFF), et la troisième position une position «INTERMITTENTE » (ON/OFF).

3. Dispositif selon l'une quelconque des revendications 1 à 2, **caractérisé en ce que** ledit mode de fonctionnement concerne l'arrêt automatique dudit système de démarrage/arrêt automatique.

4. Dispositif selon la revendication 3, **caractérisé en ce que** ledit indicateur d'état (F2) est dans ladite première position (P1) dans un état d'inhibition d'une phase d'arrêt automatique, dans la deuxième position (P2) dans un état d'activation d'un arrêt automatique, et dans la troisième position (P3) dans un état d'empêchement d'un arrêt automatique.

5. Dispositif selon la revendication 4, **caractérisé en ce que** ladite première position est une position «INACTIVE », la deuxième position une position «ACTIVE », et la troisième position une position « INTERMITTANTE».

## Claims

1. Device for controlling the state of functioning of a system (S1) for automatic starting /stopping of a thermal engine of the said vehicle¹, the said device comprises at least one indicator of the state of functioning (F1, F2) which is associated with a functioning mode of the said system, and adopts a first position (B1, P1) in a state of inhibition of the said functioning mode, a second position (B2, P2) in a state of activation of the said functioning mode, and a third position (B3, P3) in an intermediate state of the said functioning mode, and the said functioning mode concerns starting the functioning of the said system (S1) for automatic starting /stopping,
**characterised in that** the said state indicator (F1) is, in the said first position, in a state of inhibition of functioning of the said system, in the second position it is in a state of activation of functioning of the said system, and in the third position it is in a state of downgraded functioning in which, in the running position, the system does not assure all the functionalities provided.
¹ Translator's note: The French says "the said vehicle" at this point, although there has been no mention of a vehicle so far in the claims. Presumably this has accidentally been incorporated from the description of the patent.

2. Device according to claim 1, **characterised in that** that said first position is an "ACTIVE" (ON) position, the second position is an "INACTIVE" (OFF) position, and the third position is an "INTERMITTENT" (ON / OFF) position.

3. Device according to either of claims 1 and 2, **characterised in that** the said functioning mode concerns the automatic stopping of the said automatic starting / stopping system.

4. Device according to claim 3, **characterised in that** the said state indicator (F2) is in the said first position (P1) in a state of inhibition of an automatic stopping phase, in the second position (P2) it is in a state of activation of an automatic stop, and in the third position (P3) it is in a state of prevention of an automatic stop.

5. Device according to claim 4, **characterised in that** the said first position is an "INACTIVE" position, the second position is an "ACTIVE" position, and the third position is an "INTERMITTENT" position.

## Patentansprüche

1. Vorrichtung zur Kontrolle des Betriebszustandes eines Systems (S1) für das automatische Starten/Abschalten des Verbrennungsmotors eines Fahrzeugs, wobei die besagte Vorrichtung mindestens einen auf eine Betriebsart des besagten Systems bezogenen Betriebszustandsanzeiger (F1, F2) umfasst, der eine erste Position (B1, P1) in einem Sperrzustand der besagten Betriebsart, eine zweite Position (B2, P2) in einem Aktivierungszustand der besagten Betriebsart (B2, P2) und eine dritte Position (B3, P3) in einem Zwischenzustand der besagten Betriebsart einnimmt, wobei sich der besagte Betriebszustand auf die Einschaltung des besagten Systems (S1) für das automatische Starten/Abschalten bezieht, **dadurch gekennzeichnet, dass** sich der besagte Zustandsanzeiger (F1) in der besagten ersten Position in einem Zustand zur Sperrung des Betriebs des besagten Systems, in der zweiten Position in einem zur Aktivierung des Betriebs des besagten Systems und in der dritten Position in einem Zustand mit eingeschränktem Betrieb befindet, in dem das System in Startposition nicht alle vorgesehenen Funktionalitäten ausführt.

2. Vorrichtung nach Anspruch 1, **dadurch gekennzeichnet, dass** es sich bei der besagten ersten Position um eine "AKTIVE" Position (EIN), bei der zweiten Position um eine "INAKTIVE" Position (AUS) und bei der dritten Position um eine "INTERMITTIERENDE" Position (EIN/AUS) handelt.

3. Vorrichtung nach einem der Ansprüche 1 bis 2, **dadurch gekennzeichnet, dass** sich die besagte Betriebsart auf die automatische Abschaltung des besagten für das automatische Starten/Abschalten bezieht.

4. Vorrichtung nach Anspruch 3, **dadurch gekennzeichnet, dass** sich der besagte Zustandsanzeiger (F2) in der besagten ersten Position (P1) in einem Zustand zur Sperrung einer automatischen Abschaltphase, in der zweiten Position (P2) in einem Zustand zur Aktivierung einer automatischen Abschaltung und in der dritten Position (P3) in einem Zustand zur Verhinderung einer automatischen Abschaltung befindet.

5. Vorrichtung nach Anspruch 4, **dadurch gekennzeichnet, dass** es sich bei der besagten ersten Position um eine "INAKTIVE" Position, bei der zweiten Position um eine "AKTIVE" Position und bei der dritten Position um eine "INTERMITTIERENDE" Position handelt.
